# NEUE EUROPÄISCHE PATENTSCHRIFT

(11) **EP 1 291 105 B2**
(45) Veröffentlichungstag und Bekanntmachung des Hinweises auf die Entscheidung über den Einspruch: **19.11.2008**
(45) Hinweis auf die Patenterteilung: 25.01.2006
(21) Anmeldenummer: 02018939.5
(22) Anmeldetag: 26.08.2002
(51) Int. Cl.: B23C 3/06, B23C 5/08, B23C 5/20

(54) **Schneidplatte und Fräswerkzeug**
Cutting insert and milling tool
Plaquette de coupe et outil de fraisage

(30) Priorität: 10.09.2001 DE 10144542
(43) Veröffentlichungstag der Anmeldung: 12.03.2003
(73) Patentinhaber: WALTER AG, 72072 Tübingen (DE)
(72) Erfinder: Nerlich, Michael, 72127 Kusterdingen-Wankheim (DE); Digel, Thomas, 72810 Gomaringen (DE)
(74) Vertreter: Rüger, Barthelt & Abel Patentanwälte

(56) Entgegenhaltungen:
- DE-A- 10 006 381
- DE-A- 19 739 300
- DE-A- 19 739 366
- DE-A- 19 743 971
- DE-A- 19 927 545
- DE-C- 19 546 197
- US-A- 5 209 611
- PATENT ABSTRACTS OF JAPAN vol. 017, no. 352 (M-1439), 5. Juli 1993 (1993-07-05) -& JP 05 050315 A (TOSHIBA TUNGALOY CO LTD), 2. März 1993 (1993-03-02)
- PATENT ABSTRACTS OF JAPAN vol. 2000, no. 08, 6. Oktober 2000 (2000-10-06) -& JP 2000 126922 A (KOMATSU KOKI KK), 9. Mai 2000 (2000-05-09)

## Beschreibung

Die Erfindung betrifft eine Schneidplatte, die insbesondere für Schlichtfräser, insbesondere Kurbelwellenschlichtfräser geeignet ist.

Bei der Kurbelwellenbearbeitung sind an dem Kurbelwellenrohling oder einer durch Schruppfräsbearbeitung vorbearbeiteten Kurbelwelle weitere Bearbeitungsschritte, beispielsweise Schlichtfräsbearbeitungsschritte vorzunehmen. Im Rahmen dieser Bearbeitung kann es beispielsweise erforderlich werden, die Zylinderfläche von zylindrischen Zapfen und zugleich die an den Zapfen anschließenden Planflächen zu bearbeiten. Dies betrifft beispielsweise den Hubzapfen sowie die an den Hubzapfen anschließenden Flächen, die so qenannten Ölbünde. Zwischen den die Ölbünde bildenden Planflächen und der Zylinderfläche des Zapfens ist häufig ein so genannter Freistich vorgesehen, der ebenfalls durch die Fräsbearbeitung hergestellt werden soll.

An die Fräsbearbeitung schließen sich in der Regel weitere Bearbeitungsvorgänge an, die beispielsweise Schleifoperationen an den zylindrischen Zapfen und Rolliervorgänge an dem Freistich umfassen können. Hier wird angestrebt, die Fräsbearbeitung mit einer solchen Qualität durchzuführen, dass die sich anschließenden Bearbeitungsvorgänge auf ein notwendiges Minimum reduziert werden können.

Aus der DE 197 39 366 A1 sind ein Scheibenfräser und eine dafür geeignete Wendeplatte vorgesehen, wobei die Wendeplatten als so genannte Radialplatten mit radialer Ausrichtung an dem Werkzeugkörper gehalten sind. Die Wendeschneidplatten sind Rechteckplatten, die an zwei diagonal gegenüber liegenden Ecken Vorsprünge aufweisen, die zur Ausbildung des Freistichs an der Kurbelwelle dienen.

Bei diesem Fräswerkzeug ergibt sich für die Ausbildung der Freistiche die gleiche Anzahl aktiver Schneiden wie für die sonstigen zu bearbeitenden Flächen. Im Bereich der Freistiche ergibt sich jedoch ein höheres Zerspanungsvolumen als beispielsweise im Bereich der Zylinderfläche. Außerdem nimmt die Zahl der aktiven Schneidkanten im Bereich der Umfangsfläche noch zu, wenn besonders schmale Hubzapfen bearbeitet werden sollen, so dass aufeinander folgende Wendeschneidplatten einander stärker überlappen. In Folge dessen sind die Schnittbogenlängen im Bereich des Freistichs dann größer als im Bereich des Hubzapfens, was an dem Freistich zu erhöhtem Aufwand für die Nachbearbeitung führen kann.

Daraus leitet sich die der Erfindung zu Grunde liegende Aufgabe ab, eine Schneidplatte für ein Fräswerkzeug, sowie ein entsprechendes Fräswerkzeug zu schaffen, das es gestattet, an einer Kurbelwelle den Ölbund, den Freistich und den Hubzapfen mit ein und dem selben Werkzeug in einem Arbeitsgang zu fräsen, wonach eine spanende Nachbearbeitung, wie beispielsweise ein Nachschleifen lediglich noch an dem Hubzapfen erforderlich sein soll.

Diese Aufgabe wird mit der Schneidplatte nach Anspruch 1 sowie dem Fräswerkzeug nach Anspruch 14 gelöst:

Die Schneidplatten sind so genannte Tangentialplatten, d.h. sie sind darauf eingerichtet, an Plattensitzen montiert zu werden, bei denen die Flächennormale der Auflagefläche näherungsweise in Radialrichtung oder in Axialrichtung weist. Als Auflagefläche wird dabei die Fläche des Plattensitzes angesehen, gegen die die Schneidplatte durch eine Befestigungseinrichtung, beispielsweise eine Klemmschraube geklemmt ist. Das Tangentialplattenkonzept ermöglicht die Erhöhung der Zähnezahl im Bereich des Freistichs auch bei sehr schmalen Hubzapfen, sofern die erfindungsgemäßen Schneidplatten zum Einsatz kommen. Diese weisen wenigstens einen Vorsprung zur Ausbildung des Freistichs an ihrer Deckfläche und wenigstens einen weiteren Vorsprung an einer Seitenfläche auf. Damit kann jeder Schneidplatte, die auf einer Auflagefläche mit radialer Flächennormale sitzt, eine Schneidplatte zugeordnet werden, die an einer Auflagefläche mit axialer Flächennormale sitzt. Diese Anordnung ergibt zwei Schneidkanten für den Freistich und eine Schneidkante für die Zylinderfläche. Die Schneidkante für die Zylinderfläche wird durch einen geraden Hauptschneidkantenabschnitt gebildet. Diese Anordnung ergibt besonders kurze Schnittbogenlängen in dem Freistich. Verbleibende Bearbeitungsspuren können in einem einfachen Rolliervorgang beseitigt werden. Wenn die Bearbeitungsgenauigkeit nach dem Schlichtfräsvorgang bereits genügt, kann der Rolliervorgang auch unterbleiben.

Weiterhin hängt das Rollierergebnis wesentlich von der Qualität der Vorbearbeitung ab. Mit dem erfindungsgemäßen Schlichtfräser und der erfindungsgemäßen Schneidplatte wird bereits vor dem Rollieren eine sehr glatte Oberfläche (kurze Schnittbogenlängen) erreicht, so dass sich wiederum ein sehr gutes Rollierergebnis erzielen lässt. Im Bereich des Freistichs treten bei späterem Betrieb der Kurbelwelle große Spannungen auf. Die Oberflächenqualität im Freistich bestimmt hier die Neigung zur Rissbildung und somit die Belastbarkeit der Kurbelwelle.

Der an der Schneidplatte ausgebildete erste Vorsprung kann sich über die gesamte Länge der Deckfläche der Schneidplatte erstrecken und somit von der in Gebrauch voreilenden Seitenfläche bis zu der in Gebrauch nacheilenden Seitenfläche reichen. Der Vorsprung ist dann als in Bewegungsrichtung ausgerichtete Rippe ausgebildet. Dies stellt eine gut herstellbare und robuste Lösung dar. Bedarfsweise kann dieser Vorsprung jedoch in seinem mittleren Bereich auch unterbrochen sein, so dass er beispielsweise in zwei an der Deckfläche angeordnete Vorsprünge aufgeteilt ist. Gleiches gilt entsprechend für den zweiten Vorsprung, der an einer Seitenfläche der Schneidplatte angeordnet ist. Mit Blick auf die in Gebrauch voreilende oder die in Gebrauch nacheilende Seitenfläche, die beispielsweise ungefähr trapezförmig ausgebildet sein kann, ist ersichtlich, dass die Vorsprünge an einander diagonal gegenüber liegenden Ecken, dabei aber an Flächen der Schneidplatte angeordnet sind, die eine gemeinsame Kante haben, d.h. die einander benachbart sind. Entsprechend unterscheiden sich die Einbaulagen der Schneidplatten, bei denen der erste Vorsprung und bei denen der zweite Vorsprung aktiv ist, um eine Drehung von ungefähr 90°. Dies entspricht der unterschiedlichen Radial- bzw. Axialorientierung der Plattensitze.

Die Vorsprünge weisen miteinander übereinstimmende Konturen, d.h. übereinstimmende Schneidkanten auf. Dies in dem Sinne, dass die Hauptschneidkante des ersten Vorsprungs mit der Hauptschneidkante des zweiten Vorsprungs in Überdeckung gebracht werden kann, wenn die Schneidplatten entsprechend positioniert werden. Dadurch können beide Vorsprünge zur Ausbildung ein und desselben Freistichs heran gezogen werden und dabei etwa gleiche Spandicken abheben.

Die Vorsprünge können beispielsweise als Rippen ausgebildet sein, die im Wesentlichen parallel zueinander ausgerichtet sind, damit weisen die Rippen in beiden Einbaulagen der Schneidplatte jeweils in Umfangsrichtung des Fräswerkzeugs.

Die Schneidplatte weist vorzugsweise eine Deckfläche auf, die in zwei Flächenbereiche unterteilt ist, zwischen denen sich eine Ausnehmung befindet. Die Flächenbereiche können beispielsweise schmale streifenförmige Bereiche sein, die in einer gemeinsamen Ebene liegen und an die jeweils angrenzenden Hauptschneidkanten anschließen. Diese Flächenbereiche sind, wie die Seitenflächen und die Grundfläche der Schneidplatte vorzugsweise geschliffen, um ein präzises Arbeitsergebnis an der Kurbelwelle zu erhalten. Während die anderen Flächen plan oder konvex gewölbt ausgebildet sind, hat die Deckfläche einen konkav gewölbten Abschnitt. Dieser findet sich am Fuß des Vorsprungs. Die Aufteilung der Deckfläche in schmale, z.B. streifenförmige Flächenbereiche zwischen denen die Deckfläche etwas tiefer gelegt ist, ermöglicht die Schleifbearbeitung der Deckfläche mit einem lediglich einer Schleifkante aufweisenden Schleifwerkzeug, in dem das beim Schleifvorgang abzutragende Materialvolumen minimiert wird. Der Abschnitt zwischen den beiden Flächenbereichen kann ungeschliffen bleiben. Die beiden geschliffenen Deckflächenbereiche bilden dann eine präzise bearbeitete Fläche, die als Anlagefläche dienen kann, wenn der zweite Vorsprung aktiv ist (axial orientierter Plattensitz bezüglich der Flächennormale der Auflagefläche, auch genannt "lateraler Plattensitz"). Außerdem ist durch den Schleifvorgang die Lage der Hauptschneidkante präzise festgelegt (radial orientierter Plattensitz bezüglich der Flächennormalen der Auflagefläche, auch genannt "tangentialer Plattensitz").

Weitere Einzelheiten vorteilhafter Ausführungsformen der Erfindung ergeben sich aus Unteransprüchen, der Zeichnung oder der Beschreibung. In der Zeichnung sind Ausführungsbeispiele der Erfindung veranschaulicht. Es zeigen:
- Figur 1: zwei erfindungsgemäße Fräswerkzeuge bei der Schlichtfräsbearbeitung einer Kurbelwelle in perspektivischer Übersichtsdarstellung,
- Figur 2: die zu bearbeitende Kurbelwelle mit entsprechend abzutragenden Materialbereichen,
- Figur 3: die erfindungsgemäße.Schneidplatte in Seitenansicht,
- Figur 4: die Schneidplatte in Draufsicht,
- Figur 5: die Schneidplatte in Perspektivdarstellung,
- Figur 6: zwei Schneidplatten des Fräswerkzeugs bei der Fräsbearbeitung,
- Figur 7: den Angriff von Schleifwerkzeugen an der Schneidplatte zur Herstellung der Schneidplatte,
- Figur 8: eine abgewandelte Ausführungsform der Schneidplatte,
- Figur 9: eine weiter abgewandelte Ausführungsform der Schneidplatte,
- Figur 10: die Überdeckung von Schneidplatten an dem Fräswerkzeug in einer schematisierten Darstellung und
- Figur 11: eine abgewandelte Schneidplattenanordnung an einem Fräswerkzeug.

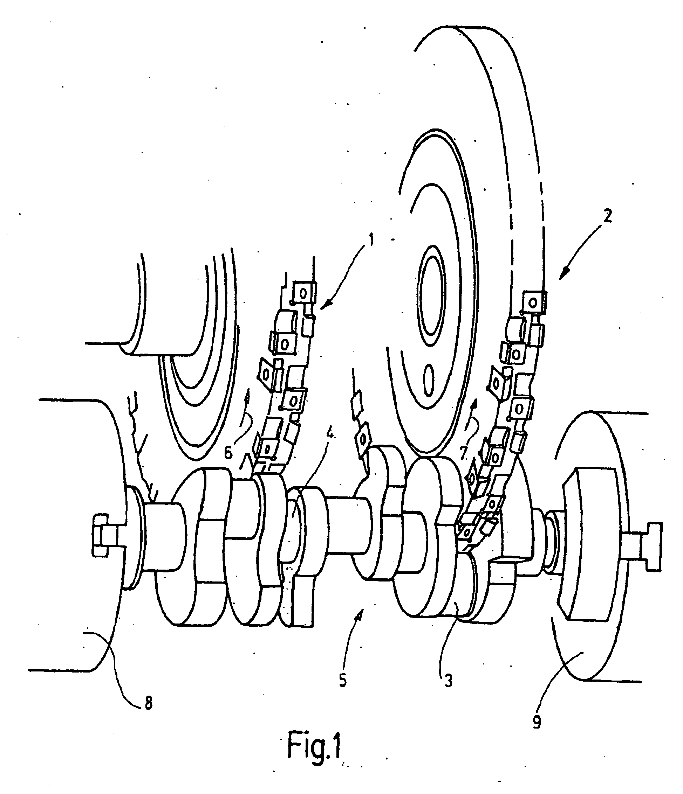

In Figur 1 sind zwei unter einander gleich ausgebildete Fräswerkzeuge 1, 2 veranschaulicht, die als Scheibenfräser ausgebildet sind und zur Schlichtfräsbearbeitung von Kurbelwellenhubzapfen 3 oder anderweitigen Zapfen, z.B. Lagerzapfen 4 einer Kurbelwelle 5 dienen. Die Fräswerkzeuge 1, 2 sind dabei an entsprechenden, nicht weiter veranschaulichten Maschinenspindeln gehalten und drehend angetrieben, wie durch Pfeile 6, 7 angedeutet ist. Die Kurbelwelle 5 ist in entsprechenden Futtern 8, 9 gehalten.

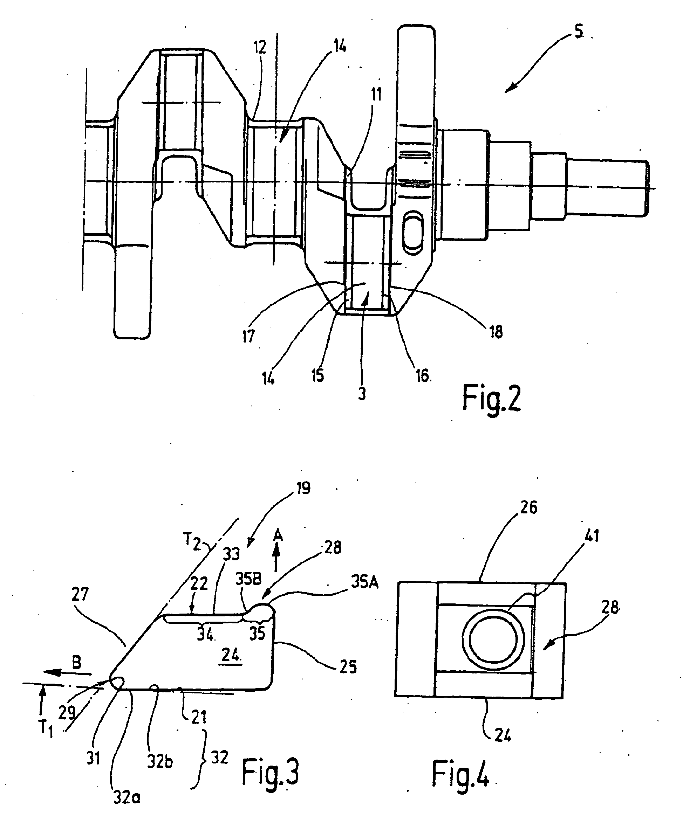

Die Kurbelwelle 5 ist nochmals in Figur 2 veranschaulicht. In dick ausgezogenen Linien ist die herzustellende Kontur dargestellt. Zunächst sind sowohl der Kurbelwellenhubzapfen 3 als auch der Lagerzapfen 4 mit einem Aufmaß oder Übermaß versehen, d.h. es ist abzutragendes Material 11, 12 vorhanden, das in Figur 2 durch strichpunktierte Linien angedeutet ist. Nach Abtrag desselben soll der Kurbelwellenhubzapfen 3 eine Zylinderfläche 14 aufweisen, an die sich an beiden Seiten ein Freistich 15, 16 anschließt. Beidseits der Freistiche sind dann Planflächen 17, 18 (sog. Ölbünde) ausgebildet. Zur Ausbildung dieser Flächen in einem Schlichtfräsbearbeitungsvorgang sind die Scheibenfräser 1, 2 mit in den Figuren 3 bis 5 veranschaulichten einheitlichen Schneidplatten 19 bestückt. Die Schneidplatten 19 sind als Tangentialplatten ausgebildet. Die Schneidplatten 19 weisen eine Grundfläche 21, eine dazu vorzugsweise parallele Deckfläche 22, sowie Seitenflächen 24, 25, 26, 27 auf. An dem seitlichen an die Seitenfläche 25 grenzenden Rand der Deckfläche 22 ist ein erster Vorsprung 28 ausgebildet. Dieser erstreckt sich von der Seitenfläche 24 bis zu der Seitenfläche 26, wie aus Figur 4 ersichtlich ist. Er geht glatt (ohne konkave Krümmung) in die Seitenfläche 25 über. An der Seitenfläche 27 ist ein zweiter Vorsprung 29 vorgesehen, der glatt, d.h. ohne konkave Krümmung, in die Seitenfläche 27 übergeht. Die Vorsprünge 28, 29 weisen in unterschiedliche Richtungen A, B, die durch ihre Zustellbewegungsrichtungen festgelegt sind. Wie in Figur 3 dargestellt, können die Richtungen A, B senkrecht zueinander festgelegt sein.

Mit der Seitenfläche 24 schließt der Vorsprung 29 eine bogenförmig gekrümmte Hauptschneidkante 31 ein, deren Form der Kontur des herzustellenden Freistichs 15, 16 entspricht. Aus der Krümmung der Hauptschneidkante 31 heraus schließt sich die Seitenfläche 27 tangential an diese Krümmung an. Damit ist die Neigung der Seitenfläche 27 zu der Grundfläche 21 auf einen Winkel festgelegt, der durch die an die Enden der Schneidkante 31 angelegten Tangenten T1, T2 bestimmt wird. Dabei kann in der Grundfläche 21 im Anschluss an die Schneidkante 31 eine mit stumpfem Winkel gegen die übrige Grundfläche 21 geneigte Facette vorgesehen sein, d.h. die Tangente T1 kann mit einem spitzen Winkel gegen die Grundfläche 21 geneigt sein.

Die Seitenfläche 24 begrenzt mit der Grundfläche 21 eine im Wesentlichen gerade Kante 32, die je nach Einbaulage der Schneidplatte 19 inaktiv ist oder als Nebenschneidkante dient. In dem in Figur 3 veranschaulichten Fall bildet die Kante 32 im Anschluss an die Hauptschneidkante 31 eine Nebenschneidkante 32a, an die sich im stumpfen Winkel eine Grundflächenkante 32b anschließt. Die Grundflächenkante 32b dient normalerweise nicht als Schneidkante.

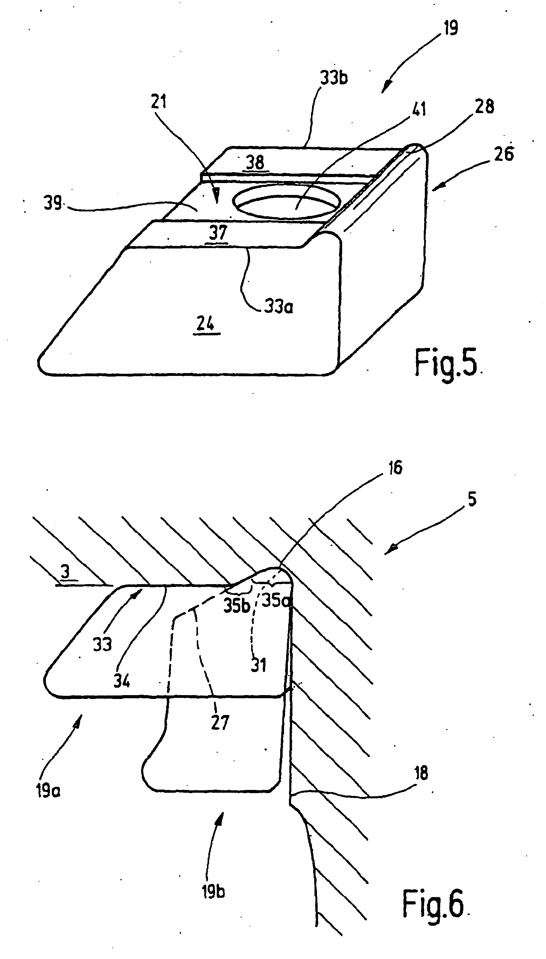

Der Vorsprung 28 und die Deckfläche 22 grenzen an die Seitenfläche 24 und definieren mit dieser eine weitere Hauptschneidkante 33, die einen geraden Abschnitt 34 und einen bogenförmigen Abschnitt 35 aufweist. Der bogenförmige oder gekrümmte Abschnitt 35 weist einen konvex gekrümmten Abschnitt 35a und einen konkav gekrümmten Abschnitt 35b auf, mit dem er in den geraden Abschnitt 34 übergeht. Der Abschnitt 35a stimmt mit der Hauptschneidkante 31 in seiner Kontur überein. Dies ist insbesondere aus Figur 6 zu entnehmen, die zwei zusammenwirkende Schneidplatten 19a, 19b veranschaulicht. Die Hauptschneidkante 31 (gestrichelte Bezugslinie) und der Schneidkantenabschnitt 35a legen übereinstimmend die konkave Kontur des Freistichs 16 fest. Der Schneidkantenabschnitt 35b der Schneidplatte 19a schafft hingegen allein den Übergang von dem Freistich 16 zu dem Hubzapfen 3 und somit zu dem geraden Abschnitt 34 der Hauptschneidkante 33. Damit ist an der Seitenfläche 27 der Schneidplatte 19b keinerlei konkave Rundung erforderlich und kann somit in einem einfachen Planschleifverfahren hergestellt werden. Entsprechendes gilt für die Seitenfläche 25.

Die Deckfläche 21 der Schneidplatte 19 ist bei einer vorteilhaften Ausführungsform, wie Figur 5 veranschaulicht, in Flächenbereiche 37, 38 unterteilt, die in einer gemeinsamen Ebene liegen. Die Flächenbereiche 37, 38 schließen jeweils unmittelbar an die benachbarte Hauptschneidkante 33a, 33b an, die den Übergang zu der jeweiligen Seitenfläche 24, 26 darstellen. Zwischen den streifenförmigen Anlageflächen 37, 38, die mit einer konkaven Rundung in den Vorsprung 28 übergehen, ist ein Flächenbereich 39 angeordnet, der tiefer liegt als die Flächenbereiche 37, 38. Während die Flächenbereiche 37, 38 präzisionsgeschliffen sind, kann der Flächenbereich 39 ungeschliffen bleiben, d.h. die entsprechenden Toleranzen aufweisen, die sich beim Sintern der vorzugsweise aus Wolframkarbid oder einem Hartmetall (oder Keramik) bestehenden Schneidplatte einstellen. Jedoch wird durch die Schleifbearbeitung der Flächenbereiche 37, 38 sowohl eine präzise Lage der Hauptschneidkanten 33a, 33b erzielt als auch eine präzise Positionierung der Schneidplatte 19 wenn die Flächenbereiche 37, 38 als Anlageflächen benutzt werden (zweite Einbaulage).

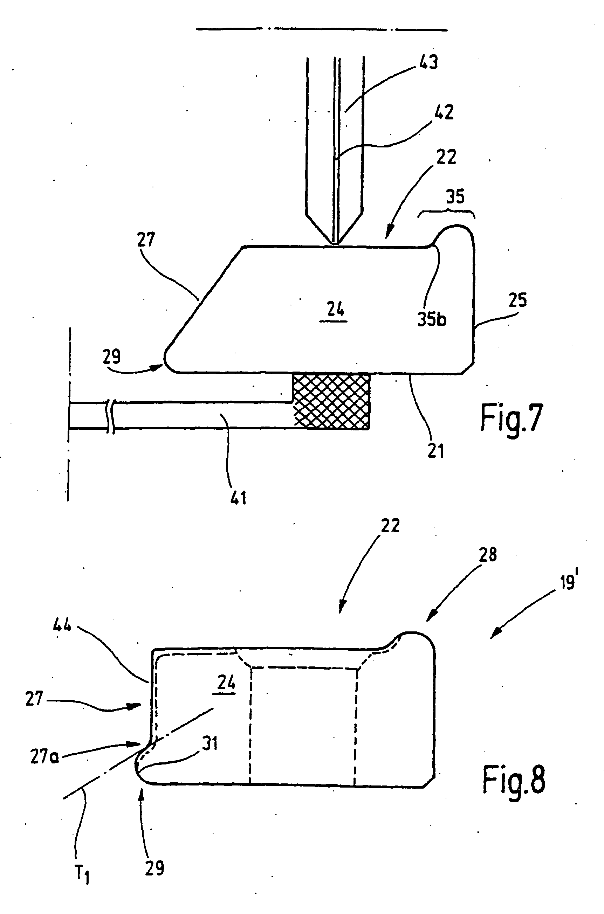

Diese Gestaltung der Schneidplatte hat wesentliche Vorteile hinsichtlich der Herstellung, wie Figur 7 veranschaulicht. Während die Grundfläche 21 und die Seitenflächen 24 bis 27 Planflächen sind, die nur über konvexe Abschnitte, wie beispielsweise den Vorsprung 29 oder die entsprechenden Kanten aneinander anschließen, können diese Planflächen und die konvexen Flächenbereiche mit kostengünstigen Planschleifverfahren, beispielsweise mittels einer Topfscheibe 41 durchgeführt werden. Dies gilt jedoch nicht für die Deckfläche 22. Hier verbietet sich ein Planschleifverfahren wegen des konkaven von dem Schneidkantenabschnitt 35b begrenzten Teils der Deckfläche 22. Diese kann auch in ihrem planen Teil nicht mit einem Planschleifverfahren bearbeitet werden, weil sich dann ein Absatz zu dem gekrümmten Schneidkantenabschnitt 35 ergeben würde. Aufgrund der Beschränkung der abzuschleifenden Deckfläche 22 auf lediglich die Bereiche, die unmittelbar an die Schneidkante 33a, 33b anschließen, ergibt sich jedoch ein sehr geringes Abtragsvolumen, wodurch ein mit einer Schleifkante 42 versehenes Schleifwerkzeug 43 zur Anwendung kommen kann, ohne dass dadurch die Produktivität des Herstellungsverfahrens zu stark beeinträchtigt würde. Somit hat die Unterbrechung der Deckfläche 22 durch den Flächenbereich 39 erhebliche Vorzüge hinsichtlich der Herstellung der Schneidplatte 19.

Die Schneidplatte 19 ist mit einer Befestigungsöffnung 41 versehen, die sich von der Deckfläche 22 zu der Grundfläche 21 erstreckt. Die Befestigungsöffnung ist z.B. zwischen den Flächenbereichen 37, 38 untergebracht.

Figur 8 veranschaulicht eine abgewandelte Ausführungsform einer Schneidplatte 19'. Diese unterscheidet sich von der vorbeschriebenen Schneidplatte 19 durch die Anordnung und Ausbildung der Seitenfläche 27. Diese ist von der Tangente T1 an das Ende der Hauptschneidkante 31 abweichend geneigt, wodurch sich ein konkaver Seitenflächenbereich 27a ergibt. Damit kann die Seitenfläche 27 nicht mehr in einem Planschleifverfahren bearbeitet werden. Entsprechend ist die Seitenfläche 27, ähnlich wie die Deckfläche 22 ausgebildet, d.h. sie ist etwa mittig mit einer breiten Ausnehmung versehen, so dass lediglich zwei randständige Streifen entstehen, die mit dem Schleifwerkzeug 43 abzuschleifen sind. Diese Ausführungsform hat den Vorteil, dass die zwischen der Seitenfläche 27 und der Seitenfläche 24 ausgebildete Kante 44 als Hauptschneidkante herangezogen werden kann, falls dieses in Einzelfällen erforderlich sein sollte. Die Kante 44 dient dann zur Bearbeitung der Zylinderfläche 14. Die Schneidplatte 19' ist dazu mit ihrer Deckfläche 21 an einer Auflagefläche eines Plattensitzes mit axialer Flächennormalen montiert.

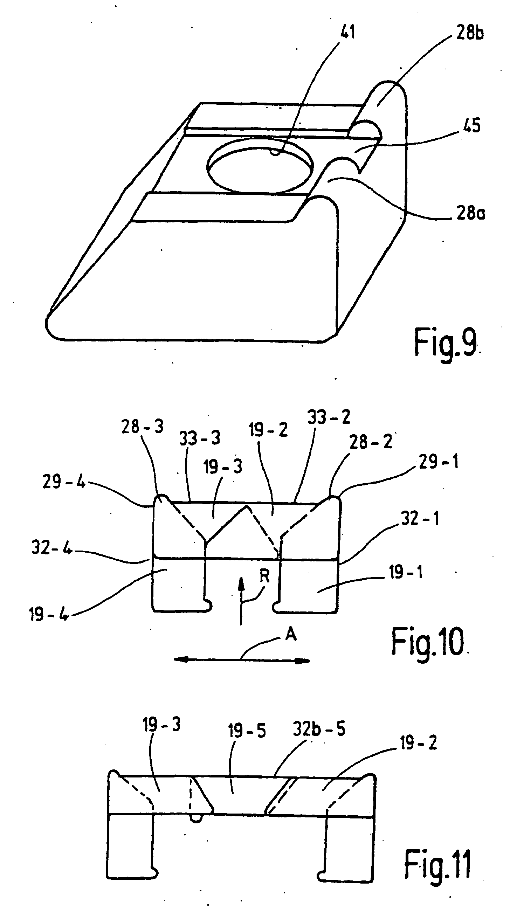

Eine prinzipiell mögliche Abwandlung zeigt außerdem Figur 9. Die Besonderheit dieser Ausführungsform liegt lediglich in einer Unterbrechung 45, die in dem Vorsprung 28 ausgebildet ist. Dieser ist dadurch in zwei einzelne Vorsprünge 28a, 28b unterteilt. Die Schneidplatte 19 ist in jeder der vorgestellten Ausführungsformen eine Präzisionsschneidplatte, die an allen sechs Seiten und im Bereich ihrer Vorsprünge 28, 29 geschliffen ist. Sie eignet sich zum Schlichtfräsen in der folgenden Weise:

In Figur 10 ist die Anordnung von vier Schneidplatten in dem Fräswerkzeug 1 oder 2 nach Figur 1 schematisch in einer Umfangsprojektion veranschaulicht. Eine erste Schneidplatte 19-1 ist an einem Plattensitz montiert, dessen Auflagefläche eine axiale Flächennormale hat. Die Axialrichtung ist in Figur 10 durch einen Pfeil A veranschaulicht. Die Schneidplatte 19-1 ist dabei so orientiert, dass ihr Vorsprung 29-1 in aktiver Schneidposition gehalten ist. Die Nebenschneidkante 32-1 ist ebenfalls aktiv.

Die zugehörige Schneidplatte ist eine Schneidplatte 19-2, die an einem tangential orientierten Plattensitz gehalten ist, dessen Auflagefläche eine in Radialrichtung R weisende Flächennormale aufweist. Die Schneidplatte 19-2 ist so gelagert und gehalten, dass ihr Vorsprung 28-2 in Umfangsrichtung des Fräswerkzeugs 1 oder 2 mit dem Vorsprung 29-1 fluchtet. An dem Vorsprung 28-2 schließt somit die Hauptschneidkante 33-2 stufenlos an.

In entsprechend gespiegelter Konfiguration sind die linksseitigen Schneidkanten des Scheibenfräsers gestaltet. Hierzu sind die Schneidplatten 19-3 und 19-4 vorgesehen. Die Hauptschneidkante 33-3 der Schneidplatte 19-3 schließt unmittelbar überdeckend an die Schneidkante 33-2 der Schneidplatte 19-2 an. Es überdecken sich wiederum die Vorsprünge 28-3 und 29-4 der Schneidplatten 19-3 bzw. 19-4. In dieser Konfiguration sind für jeden Freistich 15, 16 (siehe Figur 2) zwei Hauptschneidkanten nämlich für den Freistich 16 die Hauptschneidkanten der Vorsprünge 28-2 und 29-1 sowie für den Freistich 15 die Hauptschneidkanten der Vorsprünge 29-4 sowie 28-3 vorhanden. Für die Zylinderfläche des Kurbelwellenhubzapfens 3 oder eines etwaigen Kurbelwellenlagerzapfens 4 ist eine vollständige Schneide vorhanden, die durch die Schneidkanten 19-2 und 19-3 gebildet ist. Außerdem sind für beide Planflächen 17, 18 jeweils eine Schneidkante 32-4 bzw. 32-1 als Nebenschneidkante vorhanden.

Bei der Ausführung der Fräsarbeit dreht der in Figur 1 veranschaulichte Fräser 1 oder 2 in Richtung des Pfeils 6 oder 7. Gleichzeitig wird die Kurbelwelle 5 gedreht, wobei die Fräswerkzeuge 1, 2 eine entsprechende pendelnde Ausgleichsbewegung ausführen können. Mit zunehmender Zustellung, die durch Verringerung des Abstands zwischen dem Hubzapfen 3 und dem Fräswerkzeug 2 (oder 1) erzielt wird, tragen die Schneidplatten des Fräswerkzeugs zunächst mit ihren Vorsprüngen 28, 29 die in Figur 2 veranschaulichten Materialbereiche 11, 12 ab. Erst wenn die geraden Abschnitte der Hauptschneidkanten 33 das Aufmaß des Hubzapfens 3 oder des Lagerzapfens 4 erreichen, kommen diese mit der Kurbelwelle 5 spanend in Berührung und beginnen, Material abzutragen. In diesem Zustand ist die Schneidenzahl der den Freistich 15, 16 herstellenden Vorsprünge 28, 29 doppelt so groß wie die Schneidenzahl zur Herstellung des zylindrischen Abschnitts des Kurbelwellenhubzapfens 3 oder des Lagerzapfens 4. Es wird dadurch im Bereich der Freistiche 15, 16 eine besonders geringe Schnittbogenlänge und somit eine besonders hohe Oberflächengüte erreicht, was der Kurbelwellenqualität förderlich ist.

Figur 11 veranschaulicht eine weitere Anwendungsmöglichkeit der erfindungsgemäßen Schneidplatte 19. Die Anordnung nach Figur 11 beruht auf der Anordnung nach Figur 10, wobei zwischen die Schneidplatten 19-2 und 19-3 eine weitere Schneidplatte 19-5 eingefügt ist. Hier wird deren Grundflächenkante 32b-5 als Hauptschneidkante benutzt. Mit dieser Konfiguration lassen sich mit der einheitlichen Schneidplatte 19 beliebig breite Kurbelwellenhubzapfen fertigen.

Insbesondere zum Schlichtfräsen einer Kurbelwelle 5 sind Schneidplatten 19 geschaffen, die einen etwa quaderförmigen Grundkörper aufweisen. Der Grundkörper ist am Rand seiner Deckfläche mit einem an die benachbarte Seitenfläche anschließenden Höcker oder Vorsprung versehen, der rippenoder leistenartig ausgebildet sein kann und an seiner Stirnseite und seiner Rückseite jeweils eine Schneidkante aufweist. Diese ist Teil der Hauptschneidkante 33, die an die Deckfläche grenzt. Ein entsprechender Vorsprung 29 ist an dem unteren Ende der Seitenfläche 27 vorgesehen, die an das von dem Vorsprung 28 abliegende Ende der Deckfläche 22 grenzt. Die Seitenfläche 27 ist dabei vorzugsweise so geneigt, dass sie glatt an den Vorsprung 29 anschließt, ohne mit diesem einen konkaven Flächenbereich zu bilden. Ein entsprechendes Fräswerkzeug kann vollständig ausschließlich mit derartigen Schneidplatten bestückt werden und in einem Arbeitsgang die Zylinderfläche 14 eines Hubzapfens, entsprechende Freistiche 15, 16 zu beiden Rändern der Zylinderfläche 14 und sich anschließende Planflächen 17, 18 bearbeiten. Dabei wird im Bereich der Freistiche 15, 16 eine höhere Schneidenzahl erzielt, als für die Zylinderfläche 14. Es wird somit insbesondere im Bereich der Freistiche 15, 16 eine besonders hohe Bearbeitungsqualität erreicht. Die Schneidplatten 19 sind ohne Abstriche hinsichtlich Bearbeitungsqualität und Präzision fertigungsfreundlich gestaltet.

## Patentansprüche

1. Schneidplatte (19), insbesondere für Kurbelwellen-Schlichtfräser (1, 2),
mit einem Grundkörper, der eine Grundfläche (21), eine Deckfläche (22) sowie Seitenflächen (24, 25, 26, 27) aufweist, die zwischen der Grundfläche (21) und der Deckfläche (22) angeordnet sind,
mit einer Befestigungsöffnung (41), die sich von der Deckfläche (22) zu der Grundfläche (21) erstreckt,
mit wenigstens einem ersten Vorsprung (28), der an der Deckfläche (22) an eine Seitenfläche (25) anschließend angeordnet ist,
mit wenigstens einer ersten Hauptschneidkante (33), die einen geraden, zwischen einer der Seitenflächen (24) und der Deckfläche (22) definierten Abschnitt (34) und einen gekrümmten Abschnitt (35) aufweist, der an dem Vorsprung (28) ausgebildet ist, und
mit wenigstens einem zweiten Vorsprung (29), der an einer Seitenfläche (27) an die Grundfläche (21) anschließend angeordnet ist und eine zweite Hauptschneidkante (31) aufweist, die gekrümmt ist, wobei
der gekrümmte Abschnitt (35) der ersten Hauptschneidkante (33) und die zweite Hauptschneidkante (31) wenigstens abschnittsweise miteinander übereinstimmend ausgebildet sind.

2. Schneidplatte nach Anspruch 1, **dadurch gekennzeichnet, dass** der erste Vorsprung (28) durch eine Rippe gebildet ist, die sich parallel zu der angrenzenden Seitenfläche (25) erstreckt.

3. Schneidplatte nach Anspruch 1, **dadurch gekennzeichnet, dass** der zweite Vorsprung (29) durch eine Rippe gebildet ist, die sich parallel zu der angrenzenden Grundfläche (21) erstreckt.

4. Schneidplatte nach Anspruch 2 und 3, **dadurch gekennzeichnet, dass** die Rippen parallel zueinander ausgebildet sind.

5. Schneidplatte nach Anspruch 1, **dadurch gekennzeichnet, dass** die Grundfläche (21) mit der Seitenfläche (24), die an den geraden Abschnitt (34) der Hauptschneidkante (33) grenzt, eine Grundflächenkante (32b) begrenzt.

6. Schneidplatte nach Anspruch 5, **dadurch gekennzeichnet, dass** die Nebenschneidkante (32) länger ist als der Abstand zwischen dem geraden Abschnitt (34) der Hauptschneidkante (33) und der Grundflächenkante (32b).

7. Schneidplatte nach Anspruch 1, **dadurch gekennzeichnet, dass** die Seitenfläche (24), die an den geraden Abschnitt (34) der Hauptschneidkante (33) grenzt, plan ausgebildet ist.

8. Schneidplatte nach Anspruch 1, **dadurch gekennzeichnet, dass** die Seitenfläche (24), die an den geraden Abschnitt (34) der Hauptschneidkante (33) grenzt, mit der Grundfläche (21) einen rechten Winkel einschließt.

9. Schneidplatte nach Anspruch 1, **dadurch gekennzeichnet, dass** der gerade Abschnitt (34) der Hauptschneidkante (33) eine Länge aufweist, die größer ist als der Abstand des geraden Abschnitts (34) der Hauptschneidkante (33) von der Nebenschneidkante (32).

10. Schneidplatte nach Anspruch 1, **dadurch gekennzeichnet, dass** die Deckfläche (22) wenigstens zwei voneinander beabstandete Flächenbereiche (37, 38) aufweist, die in einer gemeinsamen Ebene liegen.

11. Schneidplatte nach Anspruch 10, **dadurch gekennzeichnet, dass** die Flächenbereiche (37, 38) an der jeweiligen Seitenfläche (24, 26) anschließen.

12. Schneidplatte nach Anspruch 1, **dadurch gekennzeichnet, dass** die Vorsprünge (28, 29) in Richtungen (A, B) orientiert sind, die miteinander einen stumpfen Winkel einschließen.

13. Schneidplatte nach Anspruch 1, **dadurch gekennzeichnet, dass** die Vorsprünge (28, 29) in Richtungen (A, B) orientiert sind, die miteinander einen rechten Winkel einschließen.

14. Fräswerkzeug mit Schneidplatten nach einem der vorhergehenden Ansprüche, mit einer ersten Gruppe Plattensitze, in denen die Schneidplatten (19-2, 19-3) mit ihren ersten Vorsprüngen (28-2, 28-3) in Aktivposition angeordnet sind, und
mit einer zweiten Gruppe Plattensitze, in denen die Schneidplatten (19-1, 19-4) mit ihren zweiten Vorsprüngen (29) in Aktivposition angeordnet sind.

15. Fräswerkzeug nach Anspruch 14, **dadurch gekennzeichnet, dass** jeder Plattensitz eine Auflagefläche aufweist, wobei die Auflageflächen der Plattensitze der ersten Gruppe eine radial orientierte Flächennormale und die Auflageflächen der zweiten Gruppe eine axial orientierte Flächennormale aufweisen.

16. Fräswerkzeug nach Anspruch 15, **dadurch gekennzeichnet, dass** die Schneidplatten (19-2, 19-3) in der ersten Gruppe von Plattensitzen in mit ihren Grundflächen (21) auf der Auflagefläche liegen und dass die Schneidplatten (19-1, 19-4) in der zweiten Gruppe von Plattensitzen mit ihrer Deckfläche (22) bzw. den Flächenbereichen (37, 38) der Deckfläche (22) aufliegen.

## Claims

1. Cutting tip (19), in particular for crankshaft finishing cutters (1, 2),
with a base body, which has a bottom face (21), a cover face (22) and also side faces (24, 25, 26, 27), which are arranged between the bottom face (21) and the cover face (22),
with a fastening opening (41), which extends from the cover face (22) to the bottom face (21),
with at least a first projection (28), which is arranged on the cover face (22) to adjoin a side face (25),
with at least a first main cutting edge (33), which has a straight section (34) defined between one of the side faces (24) and the cover face (22) and a curved section (35), which is configured on the projection (28), and
with at least a second projection (29), which is arranged on a side face (27) to adjoin the bottom face (21) and has a second main cutting edge (31), which is curved, wherein the curved section (35) of the first main cutting edge (33) and the second main cutting edge (31) are configured the same at least in sections.

2. Cutting tip according to Claim 1, **characterised in that** the first projection (28) is formed by a rib, which extends parallel to the adjoining side face (25).

3. Cutting tip according to Claim 1, **characterised in that** the second projection (29) is formed by a rib, which extends parallel to the adjoining bottom face (21).

4. Cutting tip according to Claim 2 and 3, **characterised in that** the ribs are configured parallel to one another.

5. Cutting tip according to Claim 1, **characterised in that** the bottom face (21) defines a bottom face edge (32b) with the side face (24) adjoining the straight section (34) of the main cutting edge (33).

6. Cutting tip according to Claim 5, **characterised in that** the auxiliary cutting edge (32) is longer than the distance between the straight section (34) of the main cutting edge (33) and the bottom face edge (32b).

7. Cutting tip according to Claim 1, **characterised in that** the side face (24) adjoining the straight section (34) of the main cutting edge (33) is plane.

8. Cutting tip according to Claim 1, **characterised in that** the side face (24) adjoining the straight section (34) of the main cutting edge (33) encloses a right angle with the bottom face (21).

9. Cutting tip according to Claim 1, **characterised in that** the straight section (34) of the main cutting edge (33) has a length, which is longer than the distance of the straight section (34) of the main cutting edge (33) from the auxiliary cutting edge (32).

10. Cutting tip according to Claim 1, **characterised in that** the cover face (22) has at least two spaced face areas (37, 38), which lie in a common plane.

11. Cutting tip according to Claim 10, **characterised in that** the face areas (37, 38) adjoin the respective side face (24, 26).

12. Cutting tip according to Claim 1, **characterised in that** the projections (28, 29) are oriented in directions (A, B), which enclose an obtuse angle with one another.

13. Cutting tip according to Claim 1, **characterised in that** the projections (28, 29) are oriented in directions (A, B), which enclose a right angle with one another.

14. Milling cutter with cutting tips according to one of the preceding claims,
with a first group of tip seats, in which the cutting tips (19-2, 19-3) are arranged in active position with their first projections (28-2, 28-3), and
with a second group of tip seats, in which the cutting tips (19-1, 19-4) are arranged in active position with their second projections (29).

15. Milling cutter according to Claim 14, **characterised in that** each tip seat has a supporting surface, wherein the supporting surfaces of the tip seats of the first group have a radially oriented surface normal and the supporting surfaces of the second group have an axially oriented surface normal.

16. Milling cutter according to Claim 15, **characterised in that** the cutting tips (19-2, 19-3) in the first group of tip seats lie with their bottom faces (21) on the supporting surface, and that the cutting tips (19-1, 19-4) in the second group of tip seats are supported at their cover face (22) or the face areas (37, 38) of the cover face (22).

## Revendications

1. Plaquette de coupe (19), en particulier pour fraise de finition pour vilebrequins (1, 2),
avec un corps de base qui comporte une surface de base (21), une surface de dessus (22) ainsi que des surfaces latérales (24, 25, 26, 27) disposées entre la surface de base (21) et la surface de dessus (22),
avec un orifice de fixation (41) qui s'étend de la surface de dessus 22 à la surface de base 21,
avec au moins une première saillie (28) qui est disposée sur la surface de dessus (22) et se raccorde à une surface latérale (25),
avec au moins une première arête de coupe principale (33) qui comporte une portion droite (34), définie entre une des surfaces latérales (24) et la surface de dessus (22), et une portion arrondie (35) qui est réalisée au niveau de la saillie (28), et
avec au moins une seconde saillie (29) qui est disposée sur une surface latérale (27) et se raccorde à la surface de base (21) et qui comporte une seconde arête de coupe principale (31) qui est arrondie,
la portion arrondie (35) de la première arête de coupe principale (33) et la seconde arête de coupe principale (31) présentant des conformations coïncidentes au moins dans certaines portions.

2. Plaquette de coupe selon la revendication 1, **caractérisée en ce que** la première saillie (28) est formée par une nervure qui s'étend parallèlement à la surface latérale adjacente (25).

3. Plaquette de coupe selon la revendication 1, **caractérisée en ce que** la seconde saillie (29) est formée par une nervure qui s'étend parallèlement à la surface de base adjacente (21).

4. Plaquette de coupe selon les revendications 2 et 3, **caractérisée en ce que** les nervures sont conformées de manière parallèle l'une à l'autre.

5. Plaquette de coupe selon la revendication 1, **caractérisée en ce que** la surface de base (21) délimite, avec la surface latérale (24) adjacente à la portion droite (34) de l'arête de coupe principale (33), une arête de surface de base (32b).

6. Plaquette de coupe selon la revendication 5, **caractérisée en ce que** l'arête de coupe auxiliaire (32) est plus longue que la distance entre la portion droite (34) de l'arête de coupe principale (33) et l'arête de surface de base (32b).

7. Plaquette de coupe selon la revendication 1, **caractérisée en ce que** la surface latérale (24) adjacente à la portion droite (34) de l'arête de coupe principale (33) est de conformation plane.

8. Plaquette de coupe selon la revendication 1, **caractérisée en ce que** la surface latérale (24) adjacente à la portion droite (34) de l'arête de coupe principale (33) forme, avec la surface de base (21), un angle droit.

9. Plaquette de coupe selon la revendication 1, **caractérisée en ce que** la portion droite (34) de l'arête de coupe principale (33) possède une longueur qui est supérieure à la distance entre la portion droite (34) de l'arête de coupe principale (33) et l'arête de coupe auxiliaire (32).

10. Plaquette de coupe selon la revendication 1, **caractérisée en ce que** la surface de dessus (22) comporte au moins deux zones de surface (37, 38) qui sont distantes l'une de l'autre et se trouvent dans un plan commun.

11. Plaquette de coupe selon la revendication 10, **caractérisée en ce que** les zones de surface (37, 38) se raccordent aux surfaces latérales respectives (24, 26).

12. Plaquette de coupe selon la revendication 1, **caractérisée en ce que** les saillies (28, 29) sont orientées dans des directions (A, B) qui forment entre elles un angle obtus.

13. Plaquette de coupe selon la revendication 1, **caractérisée en ce que** les saillies (28, 29) sont orientées dans des directions (A, B) qui forment entre elles un angle droit.

14. Outil de fraisage avec plaquettes de coupe selon une des revendications précédentes,
avec un premier groupe de sièges de plaquettes dans lesquels les plaquettes de coupe (19-2, 19-3) sont disposées en position active avec leurs premières saillies (28-2, 28-3), et
avec un second groupe de sièges de plaquettes dans lesquels les plaquettes de coupe (19-1, 19-4) sont disposées en position active avec leurs secondes saillies (29).

15. Outil de fraisage selon la revendication 14, **caractérisé en ce que** chaque siège de plaquette comporte une surface d'appui, les surfaces d'appui des sièges de plaquettes du premier groupe présentant une normale à la surface orientée radialement, et les surfaces d'appui du second groupe présentant une normale à la surface orientée axialement.

16. Outil de fraisage selon la revendication 15, **caractérisé en ce que** les plaquettes de coupe (19-2, 19-3) disposées dans le premier groupe de sièges de plaquettes reposent sur la surface d'appui par leur surface de base (21), et **en ce que** les plaquettes de coupe (19-1, 19-4) disposées dans le second groupe de sièges de plaquettes y reposent par leur surface de dessus (22), respectivement par les zones de surface (37, 38) de la surface de dessus (22).
